# EUROPEAN PATENT APPLICATION

(11) **EP 1 550 965 A1**
(43) Date of publication of application: **06.07.2005**
(21) Application number: 04027223.9
(22) Date of filing: 16.11.2004
(51) Int. Cl.: G06F 17/60

(54) **System and method for managing a dynamic, structured query and integrating it into a desired application**

(30) Priority: 29.12.2003 US 747632
(71) Applicant: MICROSOFT CORPORATION, Redmond, WA 98052 (US)
(72) Inventor: Diddee, Sudhir, Woodinville, Washington 98072 (US); Michaud, Dan, Washington 98027 (US)
(74) Representative: Grünecker, Kinkeldey, Stockmair & Schwanhäusser Anwaltssozietät

(57) **Abstract**

The present invention includes an information gathering system which directs a user through a dynamic, yet structured, query process. By completing the process, the user provides specific information that is immediately transported back to the company's computer system. In one embodiment, the present invention also provides an integration system that integrates the information received from the user into a desired application, designated by the company.

## Description

### BACKGROUND OF THE INVENTION

The present invention deals with gathering information from a user of a computer network. More specifically, the present invention deals with a structured, yet dynamic query system for collecting information from a user and integrating that information into a desired application.

Many businesses are currently exhibiting a presence on computer networks. For example, many companies have a presence on the global computer network sometimes referred to as the World Wide Web. This typically requires the company to provide content, such as information about the company, to a program that renders that content to users of the computer network. For instance, a user of the World Wide Web may navigate through a web browser to the home page of a company that, for example, sells electrical, hydraulic and pneumatic machines. The user views the content rendered on the home page.

In these conventional systems, the user that accesses the home page of the company may be provided with a number of pre-set selectable menu items for obtaining additional information about the company. Such menu items may include, for example, selectable tabs which take the user to a different page on the company's web site, or drop down menus which allow the user to select yet a different page of the company's web site.

Similarly, some web sites offer a search feature in which a search engine is employed. The user can input search terms and utilize the search engine to search the web site for those terms.

Some conventional web sites also offer the user an opportunity to input contact information so that a representative of the company can contact the user. Similarly, such conventional system have typically included a "Contact Us" selectable user interface item which allows the user to send a free form, textual electronic mail (email) transmission to a designated address at the company.

These prior systems have suffered from a number of disadvantages. For instance, unless the user provides a detailed email message, the user typically does not provide enough detailed information to the company in order that an appropriate representative of the company might respond to the user in a substantive, meaningful way. In other words, the user simply indicates a desire to be contacted and a representative of the company contacts the user, without any detailed knowledge as to the nature of the inquiry which will be made by the user.

In addition, these conventional systems do not, in general, facilitate a quick response by the company. In other words, a free form email is typically diverted to a general mailbox for the company. The email must be opened, and read for substance. If there is any substance in the electronic mail message, it must then be routed to an appropriate company representative for response. However, if no substantive message is included in the user's email, then a general company representative typically contacts the user. Again, more detailed information must be elicited from the user so that the user can be transferred to the appropriate contact person at the company.

All of these disadvantages render conducting business over the network cumbersome to the user. They also make it inefficient for the company to respond in a meaningful way to users that contact the company through the network.

### SUMMARY OF THE INVENTION

The present invention includes an information gathering system which directs a user through a dynamic, yet structured, query process. By completing the process, the user provides specific information that is immediately transported back to the company's computer system. In one embodiment, the present invention also provides an integration system that integrates the information received from the user into a desired application, designated by the company.

### BRIEF DESCRIPTION OF THE DRAWINGS

FIG. 1 is a block diagram of one illustrative computer environment in which the present invention can be deployed.
FIG. 2 is a block diagram of one illustrative network system in which the present invention can be deployed.
FIG. 3 is a flow diagram illustrating how a subscriber subscribes to a query integration service in accordance with one embodiment of the present invention.
FIG. 4 is a screen shot illustrating one illustrative subscription user interface.
FIG. 5 is a screen shot illustrating one illustrative form that can be filled out by a user to define information to be gathered.
FIG. 6 is a screen shot showing one illustrative user interface for selecting a template form.
FIG. 7 is a screen shot illustrating one illustrative user interface that allows the system to be tested.
FIG. 8 is a screen shot illustrating one illustrative user interface that designates who is to receive queries and how the information from the queries are to be imported at the recipient.
FIG. 9 is a screen shot illustrating one illustrative report.
FIG. 10 is a flow diagram illustrating one embodiment of how the system is used by a user.
FIG. 11 is a screen shot illustrating one embodiment of a portion of a structured query.

### DETAILED DESCRIPTION OF ILLUSTRATIVE EMBODIMENTS

The present invention deals with a system for gathering information from a user of a network. However, prior to discussing the present invention in greater detail, one environment in which the present invention can be used will be discussed.

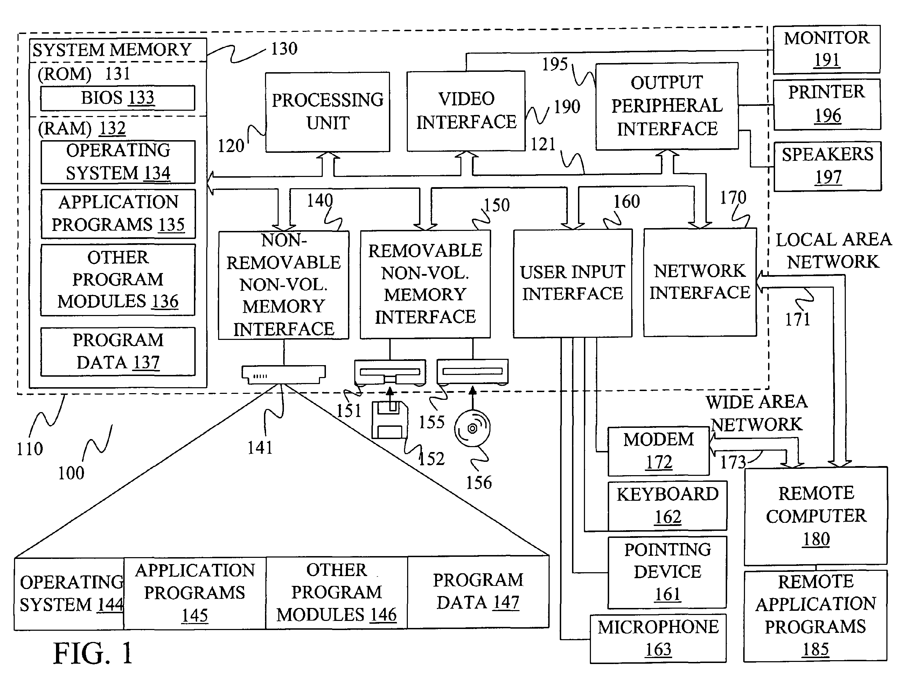

FIG. 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

With reference to FIG. 1, an exemplary system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 100. Communication media typically embodies computer readable instructions, data structures, program modules or other data in a modulated data signal such as a carrier WAV or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, FR, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way o example, and not limitation, FIG. 1 illustrates operating system 134, application programs 135, other program modules 136, and program data 137.

The computer 110 may also include other removable/non-removable volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies.

A user may enter commands and information into the computer 110 through input devices such as a keyboard 162, a microphone 163, and a pointing device 161, such as a mouse, trackball or touch pad. Other input devices (not shown) may include a joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 190.

The computer 110 may operate in a networked environment using logical connections to one or more remote computers, such as a remote computer 180. The remote computer 180 may be a personal computer, a hand-held device, a server, a router, a network PC, a peer device or other common network node, and typically includes many or all of the elements described above relative to the computer 110. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user-input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on remote computer 180. It will be appreciated that the network connections shown are exemplary and other means of establishing a communications link between the computers may be used.

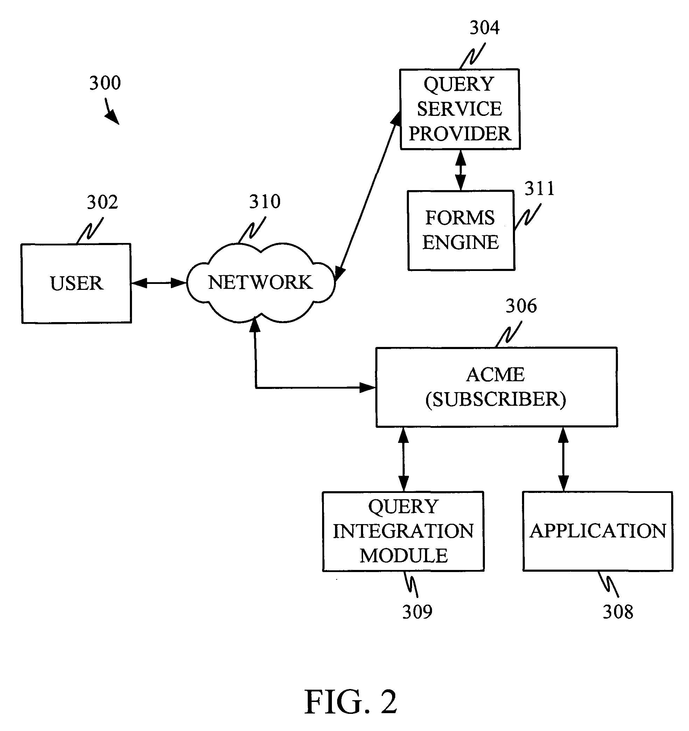

FIG. 2 is a block diagram of another, more broad environment in which the present invention can be used. FIG. 2 shows system 300 which illustrates user 302, query service provider 304 and a subscriber (also referred to as the ACME Company) 306 which runs a software application 308. User 302, query service provider 304 and subscriber 306 are all shown connected through network 310. In one illustrative embodiment, network 310 is a global computer network, such as the Internet. However, network 310 could be any other network such as an intranet, or another network. User 302, service provider 304 and subscriber 306 can illustratively communicate with one another over network 310. For instance, where network 310 is a global computer network, user 302 runs a browser to view content provided by subscriber 306. Also, subscriber 306 can view content provided by service provider 304 through network 310 as well.

Subscriber 306 is shown as including an application 308. Application 308 can, for example, be an electronic mail program, a contact management program, a scheduler, or any of a wide variety of other applications, and the ones listed are mentioned for the sake of example only.

For the sake of the present example, it will be assumed that subscriber 306 is a company which sells electrical, hydraulic and pneumatic equipment. Subscriber 306 can sell that equipment over network 310, or otherwise, but it at least provides information about its equipment over network 310. Therefore, in the example in which network 310 is the Internet, subscriber 306 will illustratively provide content, such as a home page that contains information about subscriber 306, and a plurality of linked pages each of which provide more detailed information about the subscriber. The information may include information about the equipment offered by subscriber 306.

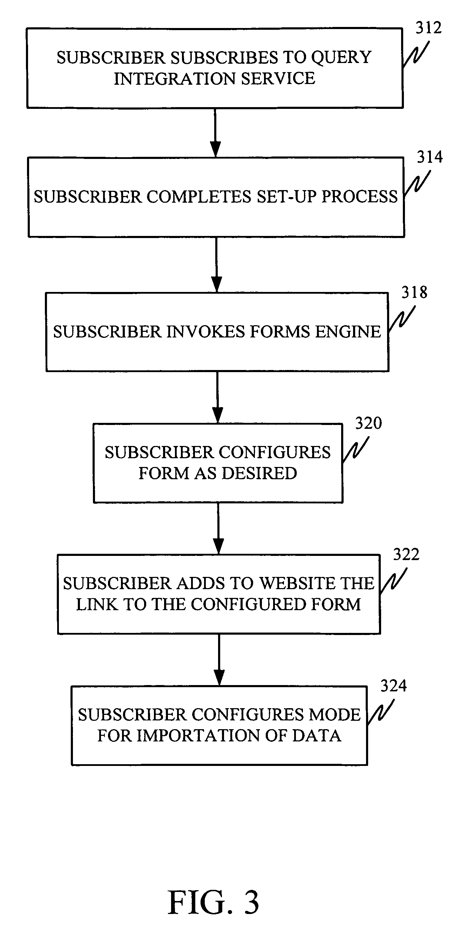

While aspects of the invention are described in greater detail below with respect to FIGS. 3-11, a brief overview will be discussed first with respect to FIG. 2. In one embodiment of the present invention, subscriber 306 subscribes to a query service as provided by query service provider 304. This allows user 302 to browse the content offered by subscriber 306 over network 310, and, if desired, to navigate through a directed, yet dynamic query offered by query service provider 304. The query gathers detailed information from user 302 identifying the information that user 302 wishes to obtain from subscriber 306. When the query is completed by user 302, it is submitted to query service provider 304 which immediately transmits an electronic mail message (or other communication message) along with the information gathered from the user 302 in response to the query, to subscriber 306.

During set up of the query service, subscriber 306 illustratively indicates whether the subscriber wishes to manually integrate the information obtained in response to the query into application 308, or whether direct, automated integration is desired. If direct, automated integration is desired, the information is provided to query integration module 309 which automatically integrates the information into application 308 based on the schema corresponding to application 308.

FIG. 3 is a flow diagram illustrating, in accordance with one embodiment of the invention, how subscriber 306 subscribes to the query service provided by query service provider 304. Subscriber 306 first accesses content provided by query service provider 304. The content accessed will illustratively include a subscription option which allows subscriber 306 to subscribe to the query service by filling out a form and submitting it to query service provider 304 through network 310. This is indicated by block 312.

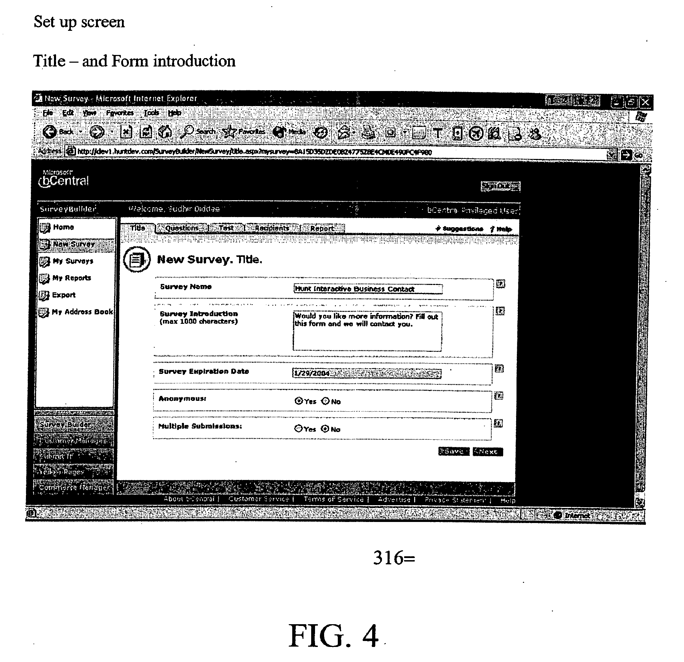

Subscriber 306 then completes the set up process by providing information requested by query service provider 304. This is indicated by block 314. FIG. 4 illustrates a screen shot 316 which shows one embodiment of a subscription screen used by query service provider 304 to enable subscriber 306 to subscribe. The subscription screen illustrates that subscriber 306 can input such things as the name of the survey or query, introduction information which introduces user 302 to the query, a date on which the survey or query will expire, whether the users that respond to the query is to be anonymous and whether the query is to be submitted to multiple parties (or recipients) once it is completed. Of course, this is only part of the registration information which can be sought by query service provider 304 and additional screens of information can be presented to subscriber 306 as well.

Once the subscription is complete, subscriber 306 then invokes a forms engine 311 supported by query service provider 304. The forms engine 311 can be accessed at query service provider 304 through network 310, or it can be downloaded through subscriber 306, through network 310, from query service provider 304. In either case, the forms engine 311 renders a form that can be completed by subscriber 306 to configure the dynamic, structured query ultimately presented to user 302. Invoking the forms engine 311 is illustrated by block 318 in FIG. 3.

Once the forms engine 311 has been invoked, the forms engine 311 renders a form and subscriber 306 configures the form as desired. This is indicated by block 320.

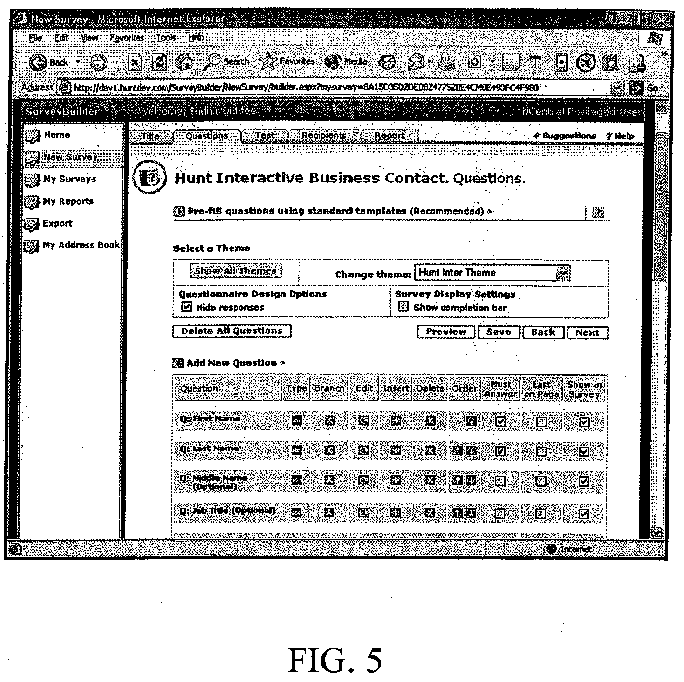

FIG. 5 shows one illustrative form that can be used by subscriber 306 to configure the query presented to user 302, to obtain desired information. The form shown by FIG. 5 allows subscriber 306 to select boxes indicating whether the response should be hidden from the user, and whether a completion bar should be displayed illustrating how much of the query the user has completed. The form also shows a plurality of columns which are discussed in turn.

The first column on the left indicates the question that is being asked. Questions can ask for a wide variety of information, such as first name, last name, or any desired textual question which the subscriber 306 wishes to enter. The second column indicates the type of response which the subscriber 306 desires for the question. For example, subscriber 306 may require user 302 to respond to the question by checking a check box, by selecting an item from a drop down menu, etc. The type of response required is selected by subscriber 306 in the second column.

The third column indicates the question branching logic. For instance, subscriber 306 may indicate that if the user 302 answers the fifth question by selecting answer A in a check box, that the form then skip to a pre-designated subsequent question, such as question 10. However, if the user answers the fifth question by selecting answer B, then the form continues with the sixth question. For example, if the user wishes to obtain information about an electric motor, a question (say question 5) may provide the user with a check box response asking what horse power motor the user wishes to inquire about. If the user selects check box A which, for example, corresponds to a three-horse power motor, then the branching logic causes the form to skip to a plurality of questions corresponding to three-horse power motors. This branching logic enables the query to take on a dynamic quality that elicits detailed information from the user.

The next column in the form shown in FIG. 5 allows the subscriber 306 to edit the question. By checking the edit box, the question will be presented to subscriber 306 for textual editing.

The next column in the form shown in FIG. 5 allows subscriber 306 to insert a question, and the next column allows the subscriber 306 to delete the question from the form.

The next column shown in FIG. 5 allows subscriber 306 to change the order of the question. By selecting the down arrow, the question is moved down one place on the form. Similarly, by selecting the up arrow, the question is moved up one place on the form.

The next column allows subscriber 306 to mark a question as a "Must Answer" question. If the question is a "Must Answer" question, then the user 302 must answer the question or the user will be unable to submit the query.

The penultimate column on the form shown in FIG. 5 allows the subscriber 306 to designate that a particular question will appear as the last question on a page. The final column allows subscriber 306 to determine whether the question will be shown in the form. In other words, the question may be present, but simply turned off for a period of time, or for certain users, or for other reasons, by selecting the box in the final column.

The form shown in FIG. 5 also includes a button that allows the user to add a new question. By selecting the "Add New Question" button, a new question will be inserted in the form, where selected by the user, and the user can type the text for the new question, and check the appropriate boxes to define branching logic, etc.

It will, of course, be noted that the form shown in FIG. 5 is but one exemplary embodiment of a form which can be used in system 300 to configure the dynamic, structured query. Any other type of form could be used as well.

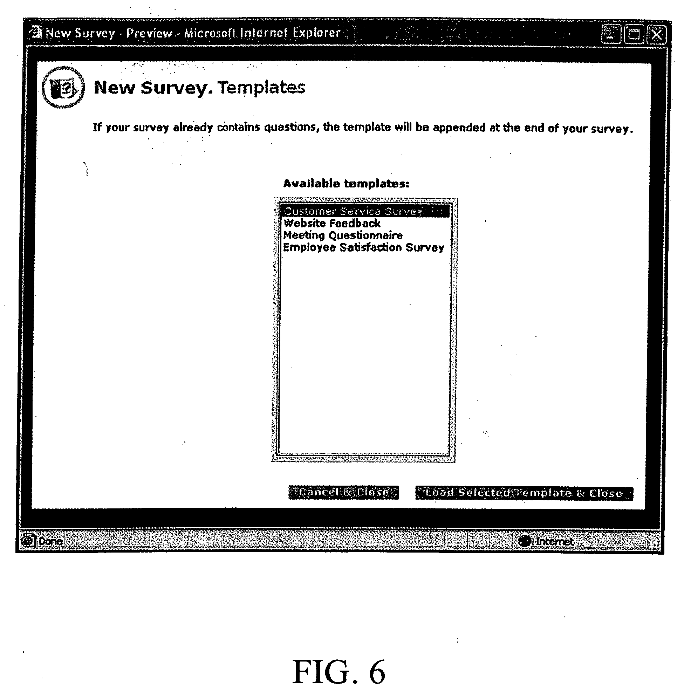

The form shown in FIG. 5 also allows the user to begin preparing the form by loading a template of pre-formatted questions. By selecting the "Pre-fill Questions Using Standard Templates" button, another user interface screen is rendered for subscriber 306. One illustrative embodiment of such a user interface screen is shown in FIG. 6.

The screen in FIG. 6 allows the subscriber 306 to select one of a plurality of different templates which are identified by subject matter. Those shown in FIG. 6 include "Customer Service Survey", "Web Site Feedback", "Meeting Questionnaire", and "Employee Satisfaction Survey". Each of those templates includes a plurality of pre-configured questions relating to the topics indicated by the title of those templates. Of course, those titles are exemplary only and any other desired template can be provided to subscriber 306 as well. Similarly, prior forms configured by that subscriber 306 can be provided as templates as well.

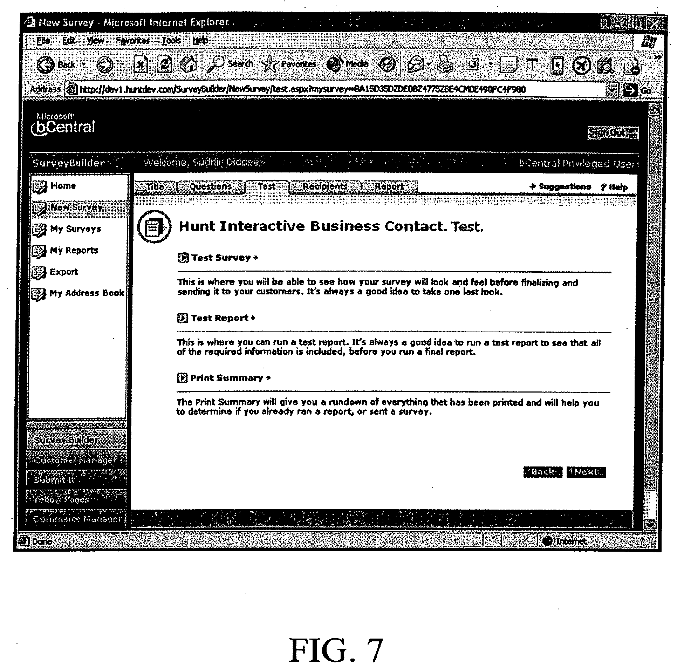

Subscriber 306 can then optionally test the form or query just configured. One embodiment of a user interface provided to subscriber 306 to enable testing is shown in FIG. 7. The user interface shown in FIG. 7 allows a subscriber 306 to select a "Test Survey" button which displays to subscriber 306 how the survey or query will appear to a user 302 filling out the survey or query.

A "Test Report" button allows subscriber 306 to run a test report on the query. This allows subscriber 306 to quickly determine whether subscriber 306 is asking all the relevant information, needed to form the desired report. If not, subscriber 306 can return to the query and revise it, as desired.

A "Print Summary" button lists items which have been printed, for the subscribers convenience.

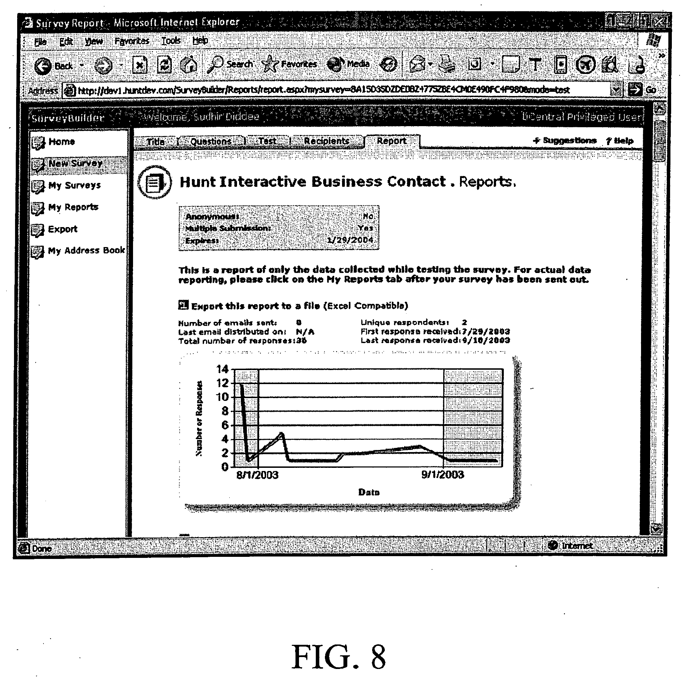

One illustrative test report is shown in FIG. 8. The report illustrated simply plots a number of responses versus time, and gives data indicative of the timing of those responses. The test report also shows information that identifies the particular query for which the report is run. Of course, it will again be appreciated that the report shown in FIG. 8 is for exemplary purposes only and a wide variety of different reports and report formats can be run on the query data returned.

It will be noted, of course, that the test user interface rendered in FIG. 7 is shown for the sake of example only. A wide variety of other or different test options could be presented to subscriber 306 as well.

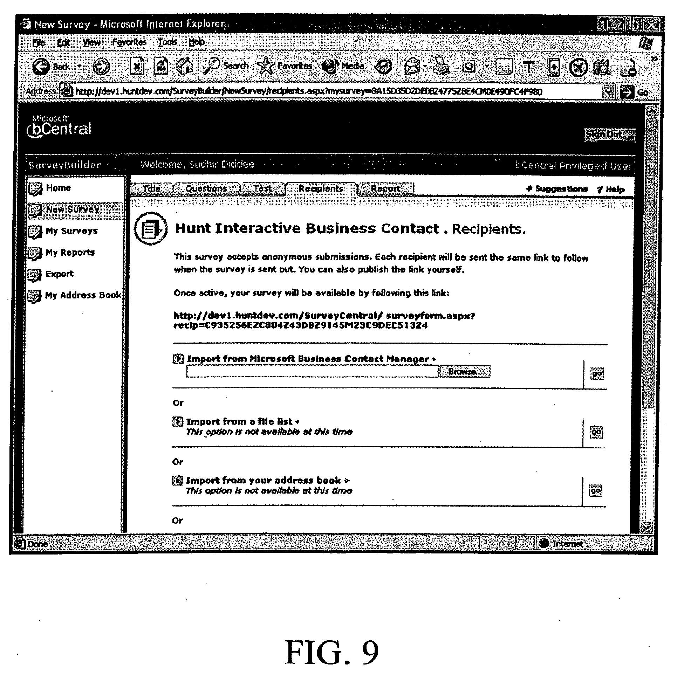

Once the query is completely configured, the forms tool 311 displays to subscriber 306 a link at which the configured form can be found. One illustrative example of such a display is shown in FIG. 9. The display shown in FIG. 9 illustrates a network link which can be selected and followed by user 302 in order to fill out the configured query. Therefore, when subscriber 306 is providing its web pages (as content) over network 310, it will illustratively include the link shown in FIG. 9. Therefore, when the user wishes to contact subscriber 306, the user simply selects the link from the page being displayed by subscriber 306 to user 302. Navigation of that link takes the user to the configured query at query service provider 304. Query service provider 304 then renders the pre-configured query to user 302 and allows the user to fill out and submit the query. Identifying the link to the pre-configured query, and adding that link to the web site of subscriber 306 is illustrated by block 322 in FIG. 3.

FIG. 9 also shows that subscriber 306 can then configure the mode for importation of the data gathered in response to the query. In other words, subscriber 306 can select manual importation. In that case, query service provider 304 simply provides the information gathered in response to the query as an attachment to an electronic mail or other message to subscriber 306. It is then the responsibility of subscriber 306 to manually import that data into the desired application 308.

However, subscriber 306 can also select a direct importation mode. In that case, either query service provider 304 directly imports the data into a format acceptable by the application 308, based on a schema describing the application 308, or subscriber 306 downloads a query integration module 309. Where integration module 309 is downloaded, query service provider 304 provides the data gathered in response to the query to query integration module 309 at subscriber 306. The query integration module 309 then automatically and directly integrates that data into application 308, again based on the schema for application 308 which is input into query integration module 309. Configuration of the mode of importation of data is illustrated by block 324 in FIG. 3.

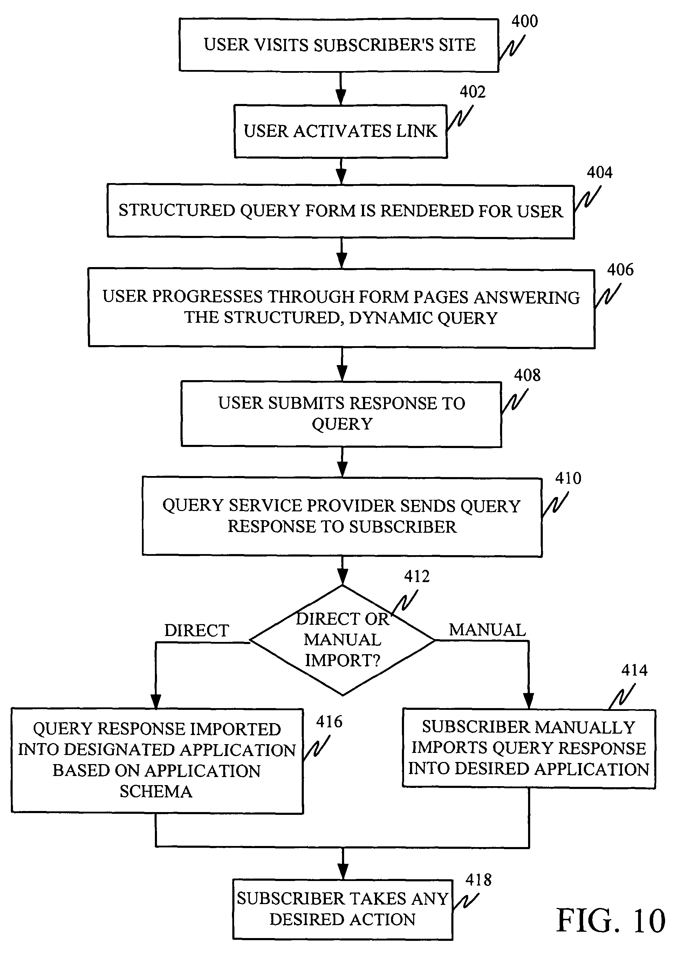

FIG. 10 is a flow diagram illustrating one embodiment of the operation of query service provider 304 in providing query services to subscriber 306 and user 302. First, user 302 visits the web site of subscriber 306. This is indicated by block 400 shown in FIG. 10. The user, in browsing the content, comes upon the link associated with the query. In other words, the user wishes to contact subscriber 306. The user then activates the link provided. This is indicated by block 402. This link, of course, takes the user 302 to query service provider 304, which renders the structured query form, pre-configured by subscriber 306. This is indicated by block 404 in FIG. 10.

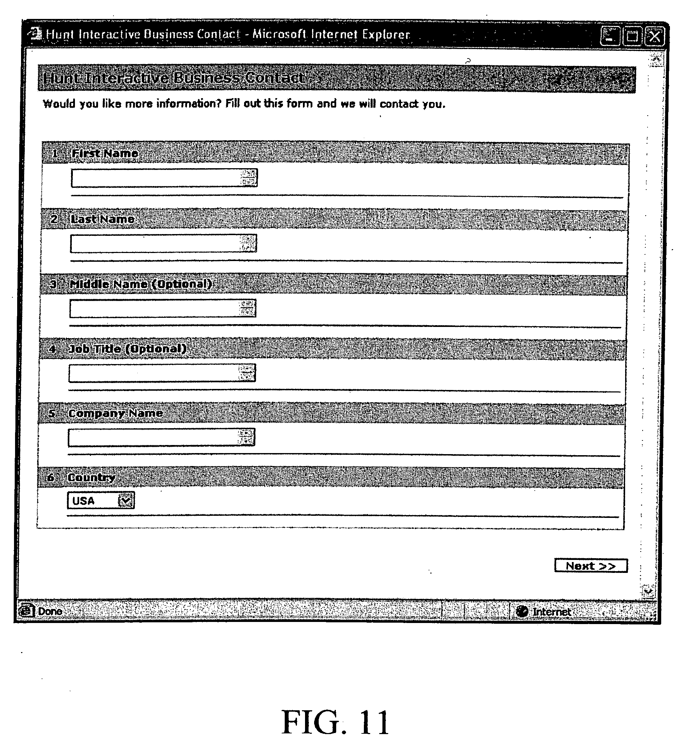

FIG. 11 illustrates one embodiment of a part of such a structured query form. As shown in FIG. 11, five questions of identifying nature are illustrated. There is also a "next" button at the bottom of the screen shown in FIG. 11 which takes the user 302 to additional questions on the query form. Of course, because of the branching logic placed in the questions, the query form dynamically elicits specific information from the user regarding the user's interest in the products or services of subscriber 306. However, this is done in a structured way so that the information can readily be imported into application 308 at subscriber 306.

In any case, once the form (such as that shown in FIG. 11) is rendered for the user 302, the user progresses through the form pages answering the structured, dynamic query. This is indicated by block 406 in FIG. 10.

Upon completing the query, the user submits its response by, for example, activating a "submit" button (not shown). This is indicated by block 408 in FIG. 10. By submitting the query, user 302 indicates to query service provider 304 that the query is ready for transmission to subscriber 306. Therefore, query service provider 304 sends the query response to subscriber 306. This is indicated by block 410 in FIG. 10. Of course, the query can also be sent directly from user 302 to subscriber 306 as well.

In either case, the query response can be sent by itself, or it can be attached to an electronic mail message, or another type of message, which is also sent to subscriber 306. For example, once a query is submitted, it can be diverted to a desired email address at subscriber 306 based upon which questions are answered, and how they are answered. The email message can include any desired text, such as "you have a new lead", or any other text. Query response information can illustratively be attached to the email message, or it can be sent as an email message itself.

Then, the next action depends on whether subscriber 306 has designated the information returned in response to the structured query for direct or manual import, as indicated at block 412. If the information has been designated for manual import, then the subscriber 306 manually imports the query response into the desired application 308. This can be done in any desired way, depending on the specific application 308 and is indicated by block 414.

If, however, at block 412, the information has been designated for direct integration into application 308, then the query response is directly imported into the designated application 308 based on the application schema. This is indicated by block 416 in FIG. 10. Again, this can be done through an importation service offered by query service provider 304, or through a downloaded query integration module 309, as desired.

Once the information has been integrated into application 308, the subscriber takes any desired action. This is indicated by block 418 in FIG. 10. For example, the subscriber can contact the user 302 by electronic mail, telephone, etc. The subscriber can also send more detailed information to the user 302 over network 310 or otherwise.

It can thus be seen that the present invention can be used to solicit detailed information form a user in a dynamic, but in a structured manner. In other words, the information is not sought by requiring the user to enter free form text, such as an electronic mail message. Instead, the user is dynamically guided through the query by the branching logic configured for the given query. Based on the navigation through the query and the information gathered, the information can be routed to an appropriate contact person immediately. This allows that contact person at subscriber 306 to initiate contact with user 302 very quickly. It also allows the user 302 to provide desired information to subscriber 306 in a quick and efficient manner, without entering free form text in an electronic mail message. Further, it allows the information to be used to generate desired reports. For example, the reports can show the number of responses over a given period of time, when those responses were received, and more sophisticated processing for report generation can be used, as desired.

The present invention also allows the query responses to be sent to a plurality of different recipients. Those recipients are simply designated during the subscription process or query formatting process, and the query service provider provides the query responses to all designated recipients.

It should be noted that the present invention can be utilized any time a user wishes to initiate any type of contact with a subscriber. The present invention also can provide pre-configured templates which have a plurality of pre-configured questions related to a subject area. Of course, these questions can be deleted, revised, or used outright, as desired.

Although the present invention has been described with reference to particular embodiments, workers skilled in the art will recognize that changes may be made in form and detail without departing from the spirit and scope of the invention.

## Claims

1. A method for collecting information from a user of a computer network, the method comprising:
providing over the computer network a dynamic query for structured responses by the user;
receiving the structured responses from the user; and
generating an electronic message to a recipient indicating that the structured responses have been received, and including the structured responses.

2. The method of claim 1 and further comprising:
automatically integrating the structured responses into a pre-identified application.

3. The method of claim 1 wherein providing comprises:
receiving a contact indication from the user; and
providing the dynamic query to the user in response to the contact indication.

4. The method of claim 3 and further comprising:
providing content over the computer network for display to the user.

5. The method of claim 4 wherein providing content comprise:
providing a contact link in the content.

6. The method of claim 5 wherein receiving the contact indication comprises:
receiving an indication that the user has activated the contact link.

7. The method of claim 1 and further comprising:
providing a query form to a recipient; and
receiving query configuration data from the recipient, on the query form, indicative of a configuration of the query.

8. The method of claim 7 wherein receiving query configuration data comprises:
receiving query definition data on the query form indicative of a content of questions in the query.

9. The method of claim 7 wherein receiving query configuration data comprises:
receiving form data on the query form indicative of non-content configuration of questions in the query.

10. The method of claim 7 wherein receiving query configuration data comprises:
receiving query branching data on the query form indicative of an order in which questions in the query are displayed to the user based on answers to the questions in the query.

11. The method of claim 10 wherein the query branching data is configured to dynamically change which questions are presented to the user based on the user's answers to previous questions in the query.

12. The method of claim 7 wherein providing a query form comprises:
providing a pre-configured query template for modification by the recipient.

13. The method of claim 1 and further comprising:
generating a report based on the structured responses.

14. The method of claim 13 wherein generating the report comprises:
indicating how many times the query was submitted by a user.

15. A query service provider for providing query services over a computer network, comprising:
a query service component configured to receive query configuration information from a content provider, and provide a dynamic, structured query, configured based on the query configuration data, to a user accessing content of the content provider over the computer network.

16. The query service provider of claim 15 wherein the content includes a link to the query and wherein the query service component is configured to provide the query to the user in response to the user activating the link.

17. The query service provider of claim 16 wherein the query service component is configured to receive user responses to the query and provide a message indicative that a user responded to the query along with the user responses.

18. The query service provider of claim 17 wherein the query service component is configured to provide the message as an electronic mail message and the user responses as an attachment to the electronic mail message.

19. The query service provider of claim 17 wherein the query service component is configured to provide an integration component to integrate the user responses into a predefined application.

20. The query service provider of claim 15 and further comprising:
a query form engine configured to provide a query form to a recipient and receive query configuration data, on the query form, indicative of a configuration of the query.

21. The query service provider of claim 20 wherein the query form engine is configured to receive query configuration data by receiving query definition data on the query form indicative of a content of questions in the query.

22. The query service provider of claim 20 wherein the query form engine is configured to receive query configuration data by receiving form data on the query form indicative of non-content configuration of questions in the query.

23. The query service provider of claim 20 wherein the query form engine is configured to receive query configuration data by receiving query branching data on the query form indicative of an order in which questions in the query are displayed to the user based on answers to the questions in the query.

24. The query service provider of claim 23 wherein the query service component is configured to access the query branching data to dynamically change which questions are presented to the user based on the user's answers to previous questions in the query.

25. The query service provider of claim 20 wherein the query form engine is configured to provide a pre-configured query template for modification by the recipient.

26. A computer readable medium storing computer readable instructions which, when invoked, cause the computer to perform steps of:
providing over a computer network a dynamic query for structured responses by the user;
receiving the structured responses from the user; and
sending an electronic message to a recipient indicating that the structured responses have been received, and including the structured responses.

27. The computer readable medium of claim 26 wherein the method further comprises:
automatically integrating the structured responses into a pre-identified application.

28. The computer readable medium of claim 26 wherein the method further comprises:
providing a query form to a recipient; and
receiving query configuration data from the recipient, on the query form, indicative of a configuration of the query.

29. The computer readable medium of claim 28 wherein receiving query configuration data comprises:
receiving query branching data on the query form indicative of an order in which questions in the query are displayed to the user based on answers to the questions in the query.

30. The computer readable medium of claim 29 wherein the query branching data is configured to dynamically change which questions are presented to the user based on the user's answers to previous questions in the query.

31. The computer readable medium of claim 28 wherein providing a query form comprises:
providing a pre-configured query template for modification by the recipient.
